# EUROPÄISCHE PATENTSCHRIFT

(11) **EP 0 313 884 B1**
(45) Veröffentlichungstag und Bekanntmachung des Hinweises auf die Patenterteilung: **12.07.1995**
(21) Anmeldenummer: 88116440.4
(22) Anmeldetag: 05.10.1988
(51) Int. Cl.: G01L 23/22

(54) **Verfahren zum Erkennen und Auswerten klopfender Verbrennung während des Betriebes einer fremdgezündeten Brennkraftmaschine mit innerer Verbrennung**
Procedure for detecting and processing a knocking signal during operation of a externally ignited engine with internal combustion
Procédé de détection et d'utilisation d'un signal de cliquetis pendant le fonctionnement d'un moteur à allumage externe et à combustion interne

(30) Priorität: 26.10.1987 DE 3736160
(43) Veröffentlichungstag der Anmeldung: 03.05.1989
(73) Patentinhaber: FEV Motorentechnik GmbH & Co. KG, D-52078 Aachen (DE)
(72) Erfinder: Pischinger, Franz, Prof. Dr. techn., D-5100 Aachen (DE); Kollmeier, Hans-Peter, Dipl.-Ing., D-5100 Aachen (DE)
(74) Vertreter: Langmaack, Jürgen, Dipl.-Ing.

(56) Entgegenhaltungen:
- DE-A- 3 011 570
- DE-A- 3 042 454

## Beschreibung

Die Erfindung bezieht sich auf ein Verfahren zum Erkennen und Auswerten klopfender Verbrennungsabläufe während des Betriebes einer fremdgezündeten kolbenverbrennungskraftmaschine mit innerer Verbrennung, in deren Brennraum die sich bei klopfender Verbrennung ändernde elektromagnetische Strahlung erfaßt und einer Meß- und/oder Verarbeitungseinrichtung zugeführt wird.

Der effektive Wirkungsgrad von Brennkraftmaschinen ist in starkem Maße von der Höhe ihres Verdichtungsverhältnisses abhängig. Allgemein gilt, daß eine Erhöhung des Verdichtungsverhältnisses, ausgehend von Werten heutiger Serienbrennkraftmaschinen, insbesondere im Teillastbereich zu einem erheblich niedrigeren Brennstoffverbrauch führt. Diese Erhöhung wird aber durch das Auftreten klopfender Verbrennung bei hoher Motorlast begrenzt.

In der Motortechnik wird als "Klopfen" eine abnormale Verbrennungserscheinung bezeichnet, die ihre Ursachen in einem gegenüber der normalen motorischen Verbrennung außerordentlich schnellen Reaktion des brennbaren Gemisches hat und im späten Teil der Verbrennungsphase auftritt. Die genauen Vorgänge bei klopfender Verbrennung sind bis heute noch nicht eindeutig geklärt. Die am weitesten verbreitete Theorie besagt, daß es sich beim Klopfen um Selbstzündungsvorgänge im noch nicht von der Flamme erfaßten Gemisch handelt. Nach erfolgter Selbstzündung treten Flammengeschwindigkeiten auf, die sowohl auf das verbrannte Gemisch als auch auf das unverbrannte Gemisch bezogen im Überschallbereich liegen können. Weiterhin deuten die typischen Klopfschäden auf Stoßwellen hin, die bei klopfender Verbrennung entstehen.

Bei der Definition des Wortes "Klopfen" wird im allgemeinen nicht zwischen der ersten Selbstzündungserscheinung mit anschließender schneller Reaktion des brennbaren Gemisches einerseits und den dadurch angeregten Schwingungen des Gases im Brennraum andererseits unterschieden. Die schnelle Reaktion des brennbaren Gemisches stellt somit den Primäreffekt, und die anschließenden Schwingungen des Brennraumgases stellen den Sekundäreffekt dar.

Wenn eine Brennkraftmaschine mit klopfender Verbrennung betrieben wird, kann es zu einer Zerstörung des Triebwerks kommen. Um einen zerstörungsfreien Betrieb zu gewährleisten, sind die Brennkraftmaschinenhersteller daher gezwungen, insbesondere wegen unterschiedlicher Brennstoffqualitäten und wegen in der Serienfertigung auftretender Abweichungen des Verdichtungsverhältnisses, des Zündvorgangs usw. bei der Einstellung des Zündzeitpunktes entweder einen größeren Abstand von der Klopfgrenze einzuhalten oder ein Klopfregelsystem zu verwenden.

Bei Verwendung eines derartigen Regelsystems ist die Einhaltung des erwähnten Sicherheitsabstandes unnötig. Voraussetzung hierfür ist aber die Verwendung einer geeigneten Vorrichtung und eines geeigneten Verfahrens, durch die während des Motorbetriebes erkannt bzw. entschieden wird, ob klopfender Betrieb vorliegt oder nicht. Über eine entsprechende Steuereinheit werden dann entsprechende Betriebsparameter derart verstellt, daß der Motorbetrieb unmittelbar an der Klopfgrenze erfolgt. Wenn diese Bedingung erfüllt ist, wird die größtmögliche Effektivität einer Motorbauart mit hohem Verdichtungsverhältnis erzielt.

Es sind bereits mehrere Verfahren und Vorrichtungen zur Feststellung des Klopfens bekannt geworden, mit denen ein oder mehrere physikalische Größen oder Vorgänge erfaßt werden können, die sich nur während des Klopfens verändern oder nur während des Klopfens auftreten.

So ist in DE-OS 31 08 460 ein Verfahren beschrieben, mit dem die bei der Verbrennung emittierte elektromagnetische Strahlung hinsichtlich der während des Klopfens auftretenden Schwingungen ausgewertet wird. Hier werden jedoch die Sekundäreffekte klopfender Verbrennung, nämlich Schwingungen, erfaßt. Da diese Sekundäreffekte aber von der Konstruktion der Brennkraftmaschine, d.h. von der Brennraumform usw., und vom Meßort abhängen, ist die Angabe einer allgemein gültigen, auf verschiedene Motoren übertragbaren Klopfstärke problematisch.

Es sind auch schon Verfahren bekannt geworden, bei denen im wesentlichen Primäreffekte klopfender Verbrennung gemessen und zur Auswertung herangezogen werden.

So wird in DE-OS 29 32 193 eine Vorrichtung vorgeschlagen, bei der zur Erzielung hoher thermischer Wirkungsgrade Ionisationssonden als Flammenfrontfühler verwendet werden, von denen immer mindestens zwei pro Zylinder vorhanden sein müssen, um die Laufzeit der Flamme und damit die Flammenausbreitungsgeschwindigkeit zu erfassen. Hierbei ist von Nachteil, daß die Fehlermöglichkeit bei der Verwendung von zwei Sonden sehr groß ist, da die Ausbreitungsrichtung der Flamme nicht genau bekannt und auch nicht konstant ist. Bei Verwendung von vielen Ionenstromsonden ist zwar eine bessere Bestimmung der Flammengeschwindigkeit möglich, als Nachteil ergibt sich aber ein hoher fertigungstechnischer Aufwand. Ein weiterer Nachteil der Ionenstromsonden besteht darin, daß wegen der bei klopfender Verbrennung auftretenden Stoßwellen die feinen Drähte der Ionenstromsonden schnell zerstört werden und somit eine hohe Störanfälligkeit der Vorrichtung besteht.

In DE-OS 31 10 996 ist eine Sensoranordnung zur Erfassung physikalischer Parameter im Brennraum einer Brennkraftmaschine beschrieben, bei der das dem Brennraum ausgesetzte Ende des Aufnehmers pilzförmig verdickt ist. Durch diese Maßnahme erfolgt keine Begrenzung des von der Beobachtung erfaßten Volumens, sondern im Gegenteil eine Erweitung. Eine derartige Anordnung eignet sich vor allem zur Erfassung von Sekundäreffekten, nämlich den durch die Selbstzündung angeregten Schwingungen des Gases im Brennraum. Wenn jedoch der Sensor einen Hohlraum nach Art einer Heatpipe aufweist, so erfolgt im wesentlichen nur eine Beobachtung der Vorgänge im Hohlraum, oder allenfalls über mehrere Öffnungen in einem weiten Bereich des Hauptbrennraums.

Auch bei US-PS 43 93 687 erfolgt die Beobachtung des Brennraumes durch eine Vorkammer, in der das dort enthaltene Gemisch fremdgezündet wird. Hier liegen naturgemäß ebenfalls ganz andere Verhältnisse vor als bei der direkten Beobachtung des Hauptbrennraums einer Brennkraftmaschine, da die Zündvorgänge in der Vorkammer die von den Klopferscheinungen ausgehenden Signale derart überlagern, daß eine genaue Messung unmöglich ist. Im übrigen wird durch einen derartigen Sensor der Bereich der Zylinderladung beobachtet, der am frühesten nach Fremdzündung von der Flamme erfaßt wird. Dieser Bereich ist aber bei Klopfbeginn schon vollständig verbrannt, so daß hier keine Primäreffekte klopfender Verbrennung auftreten.

Aufgabe der vorliegenden Erfindung ist es, ein Verfahren zu schaffen, das ein sicheres, störungsfreies Erkennen des Primäreffektes klopfender Verbrennung im Betrieb von Brennkraftmaschinen ermöglicht und insbesondere die aufgezeigten Nachteile vermeidet.

Diese Aufgabe wird erfindungsemäß mit den im Anspruch 1 angegebenen Verfahrensschritten gelöst.

Der Vorteil bei dieser Auswertung der sich auch bei klopfender Verbrennung ändernden elektromagnetischen Strahlung besteht allgemein darin, daß die Vorgänge im Brennraum direkt erfaßt werden, und daß die optischen Signale der Brennkraftmaschine frei von elektrischen und mechanischen Störungen sind.

Dadurch, daß in Anwendung der Erfindung die sich bei klopfender Verbrennung ändernde elektromagnetische Strahlung der Brennraumgase in nur einem kleinen Meßvolumen aufgenommen wird, ist erreicht, daß der Primäreffekt klopfender Verbrennung, also die auftretende schnelle Reaktionsfront (Detonationswelle), in besonders reiner Form, d.h. ohne Überlagerung durch die Lichtemission aus der normalen Verbrennung; die auch noch im Brennraum abläuft, erfaßt wird. Die bisher vorgeschlagenen optischen Sensoren, die die Schwingungen der Lichtemission bei der Verbrennung in einer Brennkraftmaschine auswerten, sind so aufgebaut und müssen so aufgebaut sein, daß ein möglichst großes Brennraumvolumen erfaßt wird, da durch die anschließende Signalverarbeitung die bei klopfender Verbrennung auftretenden Resonanzschwingungen des Brennraumes ausgewertet werden sollen. Wenn beispielsweise ein optischer Sensor in Form eines Glasfaserbüschels in der Mittelelektrode einer Zündkerze angeordnet wird, so wird erreicht, daß ein größerer Raumwinkel im Brennraum beobachtet werden kann. Eine Anordnung, die beispielsweise einen Lichtleitstab in der Mittelelektrode einer Zündkerze enthält, besitzt aufgrund der Totalreflexionsvorgänge im Lichtleitstab einen sehr großen optischen Beobachtungswinkel, insbesondere wenn der Sensor am brennraumseitigen Ende ein konvex gewölbtes Auge besitzt, wodurch sich ein großes Beobachtungsvolumen ergibt (DE-A-3042454).

Wenn man einen Lichtleitstab am Grund einer Vorkammerkerze anordnet, so wird im wesentlichen die elektromagmetische Strahlung in der Vorkammer erfaßt. Hier liegen aber grundsätzlich andere Verbrennungsbedingungen vor als im realen Brennraum der Brennkraftmaschine, so daß eine einwandfreie meßtechnische Erfassung von Änderungen der Verbrennungsabläufe im Brennraum nicht möglich ist, (DE-A-30 11 570).

Durch die bei klopfender Verbrennung auftretende schnelle Reaktionswelle tritt ein erheblich steilerer erster zeitlicher Anstieg der Strahlungsintensität als bei nicht klopfender Verbrennung im Meßvolumen auf, wenn die schnelle Verbrennungswelle das Meßvolumen durchläuft, so daß hier ein eindeutiges Signal vorliegt, daß in der Auswerteeinrichtung verarbeitbar ist. In verbindung mit einer Motorsteuerung ist es zur Stabilisierung des Stellsignals vorteilhaft, wenn ein das Auftreten klopfender Verbrennung darstellendes Signal nur dann an eine Auswerteeinrichtung weitergegeben wird, wenn die Steigung der Strahlungsintensität im Meßvolumen über der Zeit bei klopfender Verbrennung wenigstens dreimal, vorzugsweise zwanzigmal, höher ist als bei nicht klopfender Verbrennung. Dabei ist von wesentlicher Bedeutung, daß bei dem Verfahren gemäß der Erfindung nicht die periodischen Intensitätsschwingungen (Sekundäreffekte) klopfender Verbrennung zur Beurteilung herangezogen werden, sondern der aperiodische Vorgang des ersten Intensitätsanstiegs (Primäreffekt) in einem Meßvolumen.

Durch die bei klopfender Verbrennung auftretende schnelle Reaktionswelle ergibt sich nach Durchlaufen des ersten steilen Intensitätsanstiegs ein wesentlich höheres Niveau elektromagnetischer Strahlung. Der Vergleich dieses Intensitätsniveaus nach dem ersten Anstieg mit dem bei nicht klopfender Verbrennung erlaubt eine eindeutige Identifizierung klopfender Verbrennung. In Anwendung der Erfindung ist daher vorgesehen, daß ein das Auftreten klopfender Verbrennung darstellendes Signal an eine Auswerteeinrichtung weitergegeben wird, wenn das Niveau der emittierten Strahlung nach dem ersten Anstieg bei klopfender Verbrennung wenigstens dreimal, vorzugsweise zehnmal, höher ist als bei nicht klopfender Verbrennung.

Eine vorteilhafte Vorrichtung zur Durchfürung des Verfahrens ist in den Merkmalen des Anspruchs 10 angegeben.

Eine weitere vorteilhafte Ausführungsform der Erfindung ermöglicht die Anordnung von wenigstens drei optischen Meßstellen, deren Meßergebnisse einer Verarbeitungseinrichtung zur Bestimmung der Flammengeschwindigkeit zugeführt werden.

Ausführungsbeispiele der Erfindung werden nachfolgend anhand der Zeichnungen näher beschrieben.

Fig. 1 zeigt im Diagramm den Verlauf der Intensität der im Brennraum auftretenden elektromagnetischen Strahlung bei normaler, also nicht klopfender Verbrennung.

Fig. 2 und 3 zeigen im Diagramm den Verlauf der Intensität der im Brennraum auftretenden elektromagnetischen Strahlung bei klopfender Verbrennung.

Fig. 4 zeigt im Längsschnitt eine bevorzugte Ausführungsform eines optischen Sensors zur Messung der Intensität der im Brennraum auftretenden elektromagnetischen Strahlung.

Fig. 5 zeigt im Teillängsschnitt eine weitere bevorzugte Ausführungsform als Abänderung des Gegenstandes der Fig. 4.

Fig. 6 und 7 zeigen im Längsschnitt weitere vorteilhafte Ausführungsformen eines optischen Sensors zur Messung der Intensität der im Brennraum auftretenden elektromagnetischen Strahlung.

Fig. 8 zeigt im Teillängsschnitt eine zusätzliche Maßnahme, die auch bei den Gegenständen der Figuren 4-7 anwendbar ist.

Fig. 9 zeigt eine Kolben/Zylinder-Anordnung einer Brennkraftmaschine, in deren Zylinderkopf ein optischer Sensor angeordnet ist.

Fig. 10 zeigt in Draufsicht und Fig. 11 zeigt in Seitenansicht die Anordnung von drei optischen Meßstellen in einem Sensor.

Fig. 12 zeigt den Signalflußplan einer Auswerteschaltung zur Anwendung des Verfahrens gemäß der Erfindung.

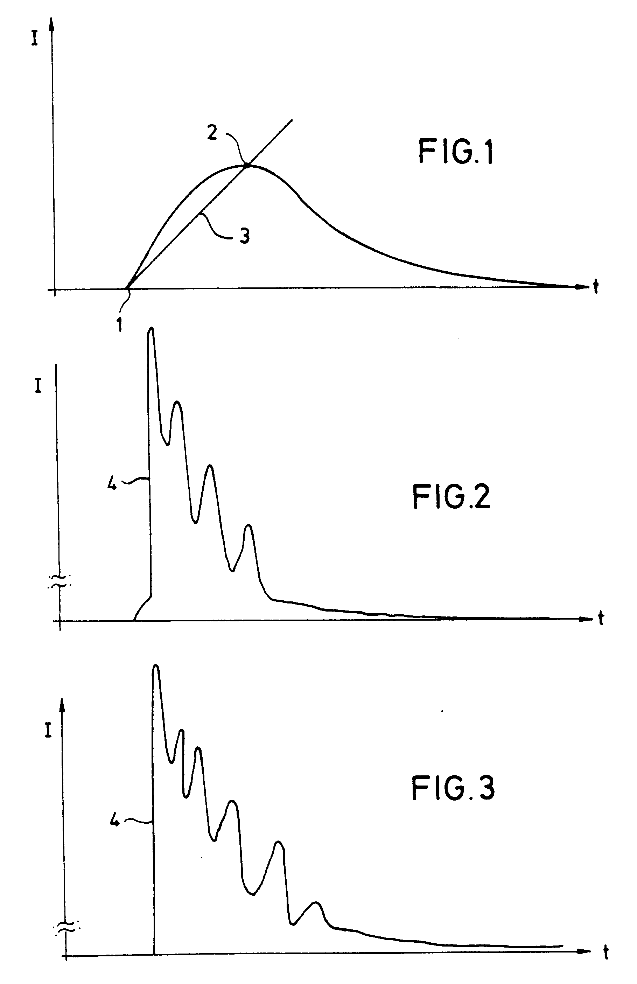

Wie Fig. 1 zeigt, ergibt sich ein Unterschied zwischen klopfendem und nicht klopfendem Motorbetrieb hinsichtlich des Verlaufs der Strahlungsintensität I als Funktion der Zeit t insbesondere auf Grund der Tatsache, daß bei normaler Verbrennung der Intensitätsverlauf deutlich degressiv ist, wobei das Intensitätsmaximum deutlich später als der erste Anstieg auftritt. Wird ein fiktiver Strahlungsintensitätsanstieg aus einer Geraden 3 definiert, die sich als Verbindungslinie aus dem Punkt 1 des ersten Strahlungsanstiegs und dem Punkt 2 des Strahlungsmaximums ergibt, so läßt sich eine noch deutlichere Trennung zwischen klopfendem und nicht klopfendem Motorbetrieb definieren. Gemäß der Erfindung ist daher weiterhin vorgesehen, daß die Steigung der Strahlungsintensität durch eine Gerade 3 dargestellt wird, die sich aus der Verbindungslinie zwischen dem ersten Anstieg 1 der Strahlungsintensität und dem ersten Maximum 2 der Strahlungsintensität ergibt, wenn man den Verlauf der Strahlungsintensität I als Funktion der Zeit t messend verfolgt.

In den Figuren 2 und 3 ist im Gegensatz zu Fig. 1 der Verlauf der Intensität I der elektromagnetischen Strahlung im Brennraum als Funktion der Zeit t bei klopfender Verbrennung dargestellt. Ein Vergleich der Signalverläufe zeigt den deutlich steileren Signalanstieg bei klopfender Verbrennung. Fig. 2 zeigt dabei den Verlauf der Strahlungsintensität I aus einem Brennraumbereich, der zunächst von der noch nicht klopfenden Verbrennung erfaßt wurde. Demgegenüber zeigt Fig.3 den Verlauf der Strahlungsintensität entsprechend Linie 4 aus einem Brennraumbereich, bei dem dies nicht der Fall ist. Bei Durchlaufen der durch das Klopfen ausgelösten Stoßwelle ergibt sich in beiden Fällen der typische steile Intensitätsanstieg entsprechend der Linie 4.

Der steile Anstieg der Strahlungsintensität I als Funktion der Zeit t bei klopfender Verbrennung bedingt einen Frequenzgehalt des entsprechenden elektrischen Signals, der erhebliche Anteile im Frequenzbereich oberhalb der niedrigsten Resonanzfrequenz des Brennraums aufweist. Die untersten Resonanzfrequenzen von Brennräumen üblicher Serienmotoren liegen zwischen 6 und 8 kHz. Eine Auswertung des Strahlungsintensitätssignals oberhalb der Resonanzfrequenz erlaubt somit eine deutliche Unterscheidung zwischen klopfendem und nicht klopfendem Motorbetrieb. Gemäß einem weiteren vorteilhaften Merkmal der Erfindung ist daher vorgesehen, daß nur der Frequenzgehalt des Signals, welches die Emission der elektromagnetischen Strahlung als Funktion der Zeit repräsentiert, ausgewertet wird, der größer als 10 kHz ist. Zu bevorzugen sind dabei Werte über 50 kHz.

Als Vorrichtung zur Durchführung der beschriebenen Verfahren wird vorzugsweise ein dem Brennraum zugewandter optischer Sensor eingesetzt, der brennraumseitig eine plankonvexe Linse vor einem Tubus aufweist, dessen Innenwandung eine lichtabsorbierende Oberfläche besitzt.

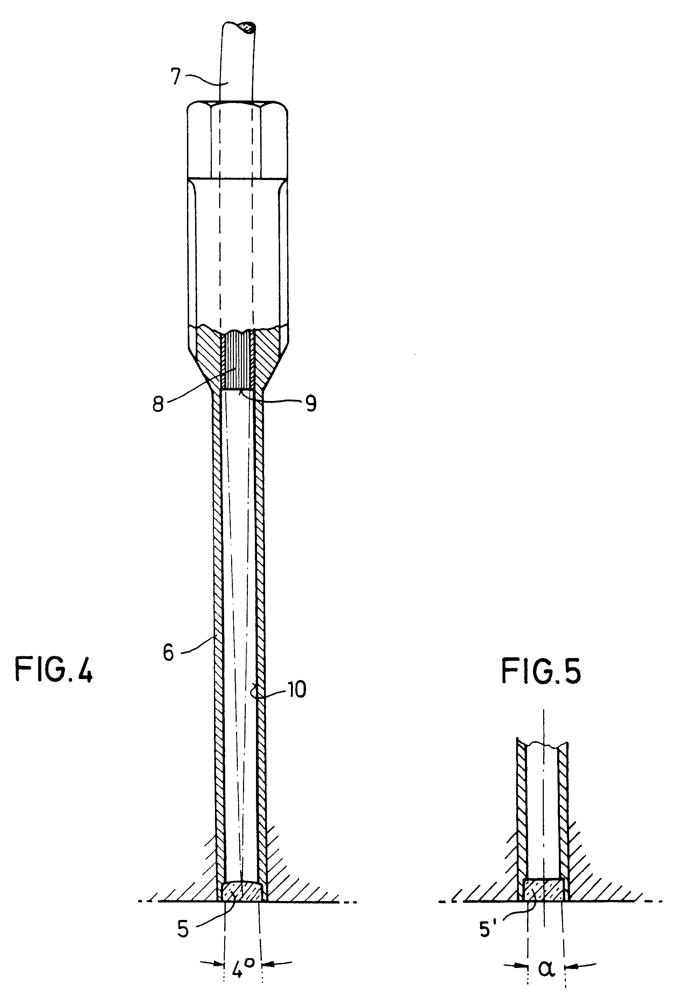

Fig. 4 zeigt ein Ausführungsbeispiel eines solchen optischen Sensors, der aus einer brennraumseitig angeordneten plankonvexen Linse 5, einem Tubus 6 und einem Lichtleitkabel 7, welches Lichtleitfasern 8 enthält, besteht. Am Grund des Tubus 6 befindet sich in der Brennebene der Linse 5 eine optische Blende 9, hier in Form von Lichtleitfasern. Die innere Mantelfläche des Tubus 6 ist mit einer lichtabsorbierenden Oberfläche 10 versehen. Durch die brennraumseitige Linse 5 werden die Lichtstrahlen in der Brennebene gebündelt. Alle Lichtstrahlen, die auf die Mantelfläche des Tubus 6 treffen, werden absorbiert; sie gelangen somit nicht in das Lichtleitkabel 7 und werden nicht von der anschliessenden Auswertung erfaßt.

Vorzugsweise kann auch ein Sensor verwendet werden, bei dem die Lichtleitfasern 8 durch einen Lichtleitstab ersetzt sind, oder bei dem der fotoelektrische Wandler direkt oberhalb der Blende angeordnet ist.

Der beschriebene Sensor erfaßt ein sehr kleines Brennraumvolumen. So hat die in Fig. 4 dargestellte Ausführungsform einen Beobachtungswinkel von ca. 4 Grad.

Durch den kleinen optischen Beobachtungswinkel wird erreicht, daß nur ein sehr kleines Brennraumvolumen erfaßt wird. Dieser kleine optische Beobachtungswinkel wird durch die brennraumseitig angeordnete plankonvexe Linse 5 an der Stirnseite des Tubus 6 erreicht, wobei sich im Brennpunkt der Linse 5 am Grund des Tubus 6 die optische Blende 9 befindet.

Wie Fig. 5 zeigt, kann die plankonvexe Linse 5 gemäß einer weiteren bevorzugten Ausführungsform durch ein dünnes planparalleles Beobachtungsfenster 5′ mit dem Beobachtungswinkel α ersetzt werden.

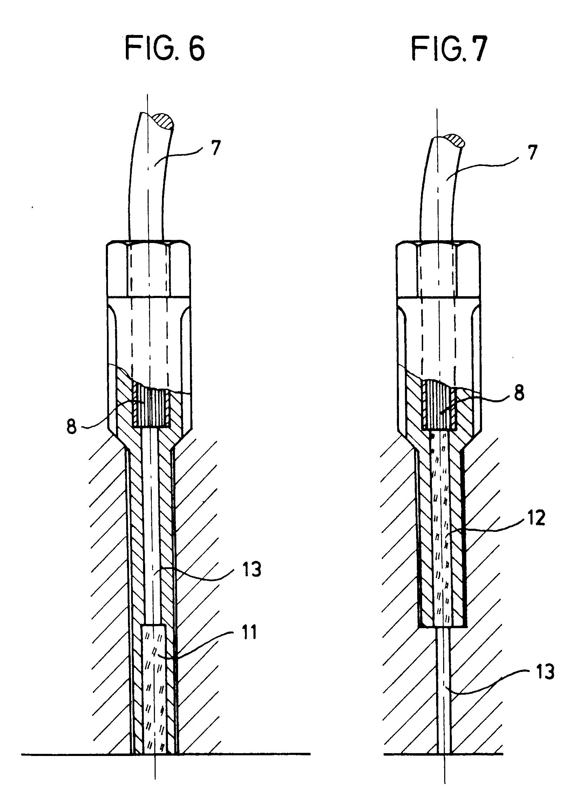

Vorteilhaft kann auch die Bauart eines Sensors sein, bei dem die Abdichtung gegenüber dem Brennraumdruck über einen Stab 11 oder 12 aus lichtdurchlässigem Material erfolgt. Der möglichst klein zu haltende Beobachtungswinkel kann dabei entsprechend den Darstellungen in Fig. 6 und 7 durch eine dünne Bohrung 13 erzielt werden, die an der dem Brennraum abgewandten Seite angeordnet ist (Fig. 6) oder an der dem Brennraum zugewandten Seite des Sensors (Fig. 7). Im letzteren Fall erfolgt die Abdichtung gegenüber dem Brennrauminnendruck durch das hinter der Bohrung 13 angeordnete lichtdurchlässige Fenster 12.

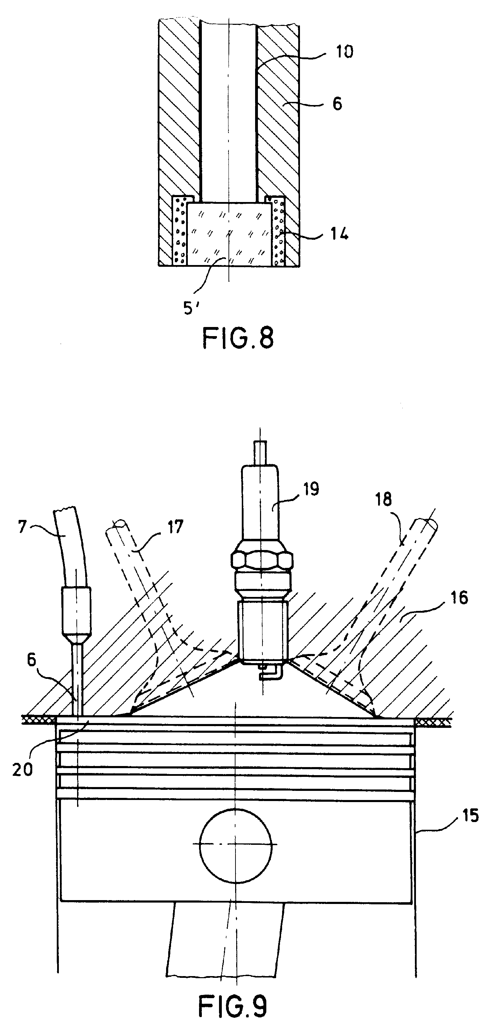

Zur Vermeidung von brennraumseitigen Verschmutzungen kann entsprechend der Darstellung in Fig. 8 der lichtdurchlässige Teil des Sensors wärmeisoliert eingebaut sein, so daß eine Aufheizung durch die Brennraumgase derart erfolgt, daß Verbrennungsrückstände abgebrannt werden. Die Wärmeisolation kann durch die Einbettung des strahlungsdurchlässigen Fensters 5′ in ein Isoliermaterial 14 erfolgen.

Fig. 9 zeigt eine Kolben/Zylinder-Anordnung 15 mit Zylinderkopf 16, in dem in üblicher Weise Ventile 17 und 18 sowie eine Zündkerze 19 angeordnet sind. Der optische Sensor mit Lichtleitkabel 7 und Tubus 6 ist über dem linken Teil des Verbrennungsraumes 20 angeordnet, und zwar derart, daß er weit von der Zündkerze 19 entfernte Brennraumbereiche erfaßt.

Durch eine Anordnung des Sensors derart, daß nur Brennraumbereiche erfaßt werden, die weit von der Zündkerze entfernt sind und somit bei Beginn des Klopfens noch nicht von der Flamme erfaßt sind, läßt sich der steile Strahlungsintensitätsanstieg in besonders reiner form beobachten. Es bietet daher Vorteile, bei einem fremdgezündeten Verbrennungsmotor den optischen Sensor so anzuordnen, daß Bereiche des offenen Brennraums erfaßt werden, die weit von der Zündeinrichtung entfernt sind.

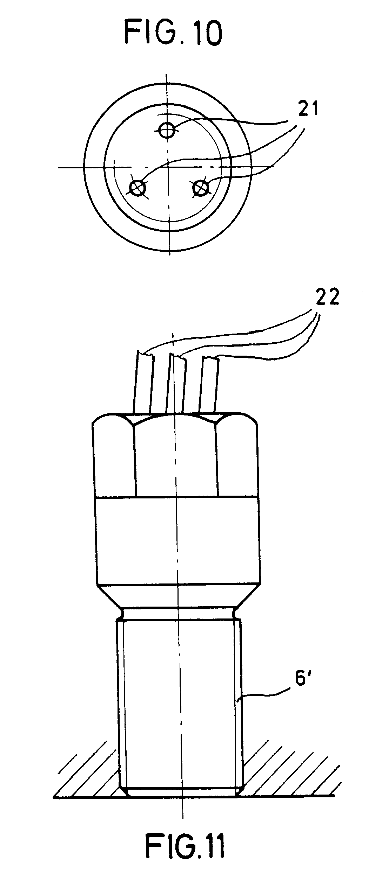

Das Verfahren gemäß der Erfindung bietet den weiteren Vorteil, daß zusätzlich zur Auswertung der Strahlungsintensität über der Zeit auch eine exakte Bestimmung der Flammengeschwindigkeit unabhängig von ihrer Ausbreitungsrichtung möglich ist. Zu diesem Zweck sind entsprechend der Darstellung in den Figuren 10 und 11 drei optische Meßstellen 21 dem Brennraum zugewandt, die über drei Lichtleitkabel 22 die Beobachtungsergebnisse zur weiteren Auswertung nach außen transferieren.

Wie bereits beschrieben, sind die Flammengeschwindigkeiten bei klopfender Verbrennung wesentlich höher als bei nicht klopfender Verbrennung, und eine exakte Bestimmung der Flammengeschwindigkeit ist in Anwendung der Erfindung dadurch möglich, daß das im oberen Kolbentotpunkt von der Messung erfaßte Volumen geringer als 0,04% des Hubvolumes ist. Durch die Anordnung von mindestens drei optischen Meßstellen kann mit Hilfe einer entsprechenden rechnerischen Auswertung die Flammengeschwindigkeit bestimmt werden, ohne daß die Ausbreitungsrichtung vorher bekannt ist. Mit nur zwei Meßstellen, wie es beispielsweise bei der Messung mit zwei Ionenstromsonden der Fall wäre, ist dies nicht möglich.

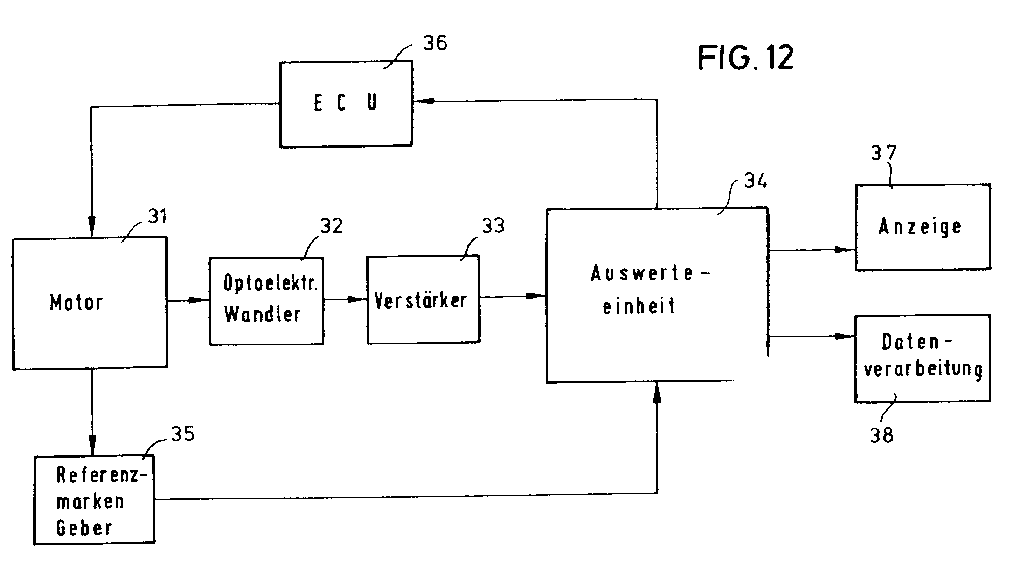

Fig. 12 zeigt den Signalflußplan eines Ausführungsbeispiels einer Auswerteschaltung zur Anwendung des Verfahrens gemäß der Erfindung. Die bei der Verbrennung im Brennraum eines Motors 31 emittierte elektromagnetische Strahlung wird in einem optoelektrischen Wandler 32 in ein der Strahlungsintensität proportionales Spannungssignal umgewandelt. Hierfür kommen sowohl Bauteile in Frage, die nach dem äußeren Fotoeffekt arbeiten (Photovervielfacher) als auch Bauteile, die den inneren Fotoeffekt nutzen (Photodioden).

In einer anschließenden Verstärkerschaltung 33 werden die Signale verstärkt. Wegen der bei klopfender Verbrennung auftretenden Intensitätsanstiege wird diese Verstärkerschaltung 33 eine Grenzfrequenz aufweisen, die weit über den unteren Brennraumresonanzfrequenzen liegt.

Die Signalverarbeitung erfolgt in einer Auswerteeinheit 34. Für einen Mehrzylindermotor muß, wenn eine zylinderindividuelle Auswertung erfolgen soll, eine Information über die Kurbelwellenstellung in die Auswerteeinheit 34 einfließen. Dies kann mit Hilfe eines Referenzmarkengebers 35 erfolgen.

Die von der Auswerteeinheit 34 ermittelte Information, nämlich ob klopfender oder nicht klopfender Motorbetrieb vorliegt, kann einer üblichen elektronischen Motorsteuerung (ECU) 36 zugeführt werden, durch die bei klopfendem Betrieb Betriebsparameter derart verstellt werden, daß der Motor wieder im nicht klopfenden Betrieb arbeitet. Die Auswerteeinheit 34 kann sowohl in Analogtechnik als auch in Digitaltechnik ausgeführt sein. Es ist auch eine Anordnung denkbar, bei der die eigentliche Signalauswertung in der elektronischen Motorsteuerung selbst erfolgt.

Um Verschmutzungseffekte des optischen Sensors zu kompensieren, kann in der Auswerteeinheit 34 eine Signalnormierung erfolgen.

Diese Normierung kann beispielsweise integral über ein oder mehrere Arbeitsspiele erfolgen oder über die Maximalwerte der die Strahlungsintensität repräsentierenden elektrischen Signale. Es ist auch eine Normierung denkbar mit einem Gewichtungsfaktor nach einer abgespeicherten Funktion, so daß die vergangenen Arbeitsspiele unterschiedlich gewichtet werden. Die Bestimmung der Strahlungsintensitätsanstiege kann z.B. durch Differentiation über den gesamten Signalverlauf oder zwischen Schwellwerten erfolgen. Insbesondere kann der fiktive Signalanstieg (vgl. Anspruch 7) bestimmt werden. Für die Entscheidung, ob klopfender Motorbetrieb vorliegt oder nicht, können die beschriebenen Kriterien getrennt oder auch in Kombination angewendet werden.

Das Ergebnis einer derartigen Signalauswertung kann auch über eine Anzeigeeinrichtung 37 ausgegeben werden und/oder einer Datenverarbeitung 38 zugeführt werden. Somit kann eine derartige Auswerteeinheit sowohl im Serienfahrzeug als auch im Laborbetrieb eingesetzt werden.

Die Gegenstände der Figuren 4-7, 10 und 11 sowie die zugehörigen Textteile gehören nicht zu der beanspruchten Erfindung.

## Patentansprüche

1. Verfahren zum Erkennen und Auswerten klopfender Verbrennungsabläufe während des Betriebes einer fremdgezündeten Kolbenverbrennungsmaschine mit innerer Verbrennung, in deren Brennraum (20) die bei klopfender Verbrennung gegenüber einem normalen Verbrennungsablauf steigende Intensität der elektromagnetischen Strahlung durch mindestens einen optischen Sensor im oberen Kolbentotpunkt in einem Volumen des offenen Brennraums erfaßt wird, das geringer als 0,04 % des Hubvolumens ist, und einer Meß- und/oder Verarbeitungseinrichtung zugeführt wird.

2. Verfahren nach Anspruch 1, dadurch gekennzeichnet, daß das im oberen Kolbentotpunkt erfaßte Volumen des offenen Brennraums geringer als 0,004% des Hubvolumens ist.

3. Verfahren nach Anspruch 1 oder 2, dadurch gekennzeichnet, daß das ein Auftreten klopfender Verbrennung darstellendes Signal an eine Auswerteeinrichtung weitergegeben wird, wenn die Steigung der Strahlungsintensität im Meßvolumen über der Zeit bei klopfender Verbrennung wenigstens 3 mal höher ist als bei nichtklopfender Verbrennung.

4. Verfahren nach einem der Ansprüche 1-3, dadurch gekennzeichnet, daß ein das Auftreten klopfender Verbrennung darstellendes Signal an eine Auswerteeinrichtung weitergegeben wird, wenn die Steigung der Strahlungsintensität im Meßvolumen über der Zeit bei klopfender Verbrennung wenigstens 20 mal höher ist als bei nichtklopfender Verbrennung.

5. Verfahren nach einem der Ansprüche 1 bis 4, dadurch gekennzeichnet, daß ein das Auftreten klopfender Verbrennung darstellendes Signal an eine Auswerteeinrichtung weitergegeben wird, wenn das Niveau der emittierten Strahlung nach dem ersten Anstieg bei klopfender Verbrennung wenigstens 3 mal höher ist als bei nichtklopfender Verbrennung.

6. Verfahren nach einem der Ansprüche 1 bis 5, dadurch gekennzeichnet, daß ein das Auftreten klopfender Verbrennung darstellendes Signal an eine Auswerteeinrichtung weitergegeben wird, wenn das Niveau der emittierten Strahlung nach dem ersten Anstieg bei klopfender Verbrennung wenigstens 10 mal höher ist als bei nichtklopfender Verbrennung.

7. Verfahren nach einem der Ansprüche 3-6, dadurch gekennzeichnet, daß die Steigung der Strahlungsintensität durch eine Gerade dargestellt wird, die sich aus der Verbindungslinie zwischen dem ersten Anstieg der Strahlungsintensität und dem Maximum der Strahlungsintensität ergibt.

8. Verfahren nach einem der Ansprüche 1 bis 7, dadurch gekennzeichnet, daß nur der Frequenzgehalt des Signals, welches die Emission der elektromagnetischen Strahlung über der Zeit repräsentiert, ausgewertet wird, der größer als 10 kHz ist.

9. Verfahren nach einem der Ansprüche 1 bis 8, dadurch gekennzeichnet, daß nur der Frequenzgehalt des Signals, welches die Emission der elektromagnetischen Strahlung über der Zeit repräsentiert, ausgewertet wird, der größer als 50 kHz ist.

10. Verfahren nach einem der Ansprüche 1-9, dadurch gekennzeichnet, daß die steigende Intensität der elektromagnetischen Strahlung durch drei optische sensoren erfaßt wird.

## Claims

1. Method of identifying and evaluating knocking combustion sequences during the operation of an externally ignited piston combustion engine with internal combustion, in whose combustion chamber (20) the intensity of the electromagnetic radiation, which rises during knocking combustion compared with a normal combustion sequence, is detected by at least one optical sensor in the piston upper dead centre in a volume of the open combustion chamber which is less than 0.04% of the stroke volume, and is fed to a measuring and/or processing device.

2. Method according to claim 1, characterised in that the volume detected in the piston upper dead centre of the open combustion chamber is less than 0.004% of the stroke volume.

3. Method according to claim 1 or 2, characterised in that a signal representing the occurrence of knocking combustion is fed to an evaluating device if the rise in radiation intensity in the measured volume over time in the case of knocking combustion is at least 3 times as high as in normal combustion.

4. Method according to one of claims 1-3, characterised in that a signal representing the occurrence of knocking combustion is fed to an evaluating device if the rise in radiation intensity in the measured volume over time in the case of knocking combustion is at least 20 times as high as in normal combustion.

5. Method according to one of claims 1 to 4, characterised in that a signal representing the occurrence of knocking combustion is fed to an evaluating device if the level of radiation emitted after the first rise during knocking combustion is at least 3 times as high as in normal combustion.

6. Method according to one of claims 1 to 5, characterised in that a signal representing the occurrence of knocking combustion is fed to an evaluating device if the level of radiation emitted after the first rise during knocking combustion is at least 10 times as high as in normal combustion.

7. Method according to one of claims 3-6, characterised in that the rise in radiation intensity is represented by a straight line obtained from the joining line between the first rise in radiation intensity and the radiation intensity maximum.

8. Method according to one of claims 1 to 7, characterised in that only the frequency content of the signal representing the emission of electromagnetic radiation over time which is higher than 10 kHz is evaluated.

9. Method according to one of claims 1 to 8, characterised in that only the frequency content of the signal representing the emission of electromagnetic radiation over time which is higher than 50 kHz is evaluated.

10. Method according one of claims 1-9, characterised in that the rising intensity of the electromagnetic radiation is detected by three optical sensors.

## Revendications

1. Procédé de détection et d'interprétation de combustions avec cognement pendant le fonctionnement d'un moteur à combustion interne à pistons à allumage commandé, l'intensité du rayonnement électromagnétique, laquelle augmente lors d'une combustion avec cognement par rapport à un déroulement de combustion normal, étant détectée dans la chambre de combustion (20) de ce moteur par au moins un capteur optique, au point mort haut du piston, dans un volume de la chambre de combustion ouverte qui est inférieur à 0,04 % de la cylindrée unitaire, et transmise à un dispositif de mesure et/ou de traitement.

2. Procédé selon la revendication 1, **caractérisé** en ce que le volume de la chambre de combustion ouverte qui est balayé par le capteur au point mort haut du piston est inférieur à 0,004 % de la cylindrée unitaire.

3. Procédé selon la revendication 1 ou 2, **caractérisé** en ce que le signal représentant une apparition de combustion avec cognement est transmis à un dispositif d'interprétation si la croissance de l'intensité du rayonnement en fonction du temps dans le volume de mesure est au moins 3 fois plus importante lors d'une combustion avec cognement que lors d'une combustion sans cognement.

4. Procédé selon l'une des revendications 1 à 3, **caractérisé** en ce qu'un signal représentant l'apparition de combustion avec cognement est transmis à un dispositif d'interprétation si la croissance de l'intensité du rayonnement en fonction du temps dans le volume de mesure est au moins 20 fois plus importante lors d'une combustion avec cognement que lors d'une combustion sans cognement.

5. Procédé selon l'une des revendications 1 à 4, **caractérisé** en ce qu'un signal représentant l'apparition de combustion avec cognement est transmis à un dispositif d'interprétation si le niveau du rayonnement émis à la suite de la première augmentation lors d'une combustion avec cognement est au moins 3 fois plus élevé que lors d'une combustion sans cognement.

6. Procédé selon l'une des revendications 1 à 5, **caractérisé** en ce qu'un signal représentant l'apparition de combustion avec cognement est transmis à un dispositif d'interprétation si le niveau du rayonnement émis à la suite de la première augmentation lors d'une combustion avec cognement est au moins 10 fois plus élevé que lors d'une combustion sans cognement.

7. Procédé selon l'une des revendications 3 à 6, **caractérisé** en ce que la croissance de l'intensité du rayonnement est représentée par une droite qui s'obtient à partir de la ligne de jonction entre la première augmentation de l'intensité du rayonnement et le maximum de l'intensité du rayonnement.

8. Procédé selon l'une des revendications 1 à 7, **caractérisé** en ce que seule est interprétée la réponse en fréquence, du signal représentant l'émission du rayonnement électromagnétique en fonction du temps, qui est supérieure à 10 kHz.

9. Procédé selon l'une des revendications 1 à 8, **caractérisé** en ce que seule est interprétée la réponse en fréquence, du signal représentant l'émission du rayonnement électromagnétique en fonction du temps, qui est supérieure à 50 kHz.

10. Procédé selon l'une des revendications 1 à 9, **caractérisé** en ce que l'intensité croissante du rayonnement électromagnétique est détectée par trois capteurs optiques.
